# EUROPEAN PATENT APPLICATION

(11) **EP 1 361 700 A1**
(43) Date of publication of application: **12.11.2003**
(21) Application number: 03252849.9
(22) Date of filing: 07.05.2003
(51) Int. Cl.: H04L 12/26, H04L 12/40

(54) **Service channel over the ethernet inter-frame gap**

(30) Priority: 07.05.2002 US 378291 P
(71) Applicant: Marconi Intellectual Property (Ringfence) Inc., Warrendale, Pennsylvania 15086 (US)
(72) Inventor: Leroux, Andre, Montreal, Quebec H4A 2R1 (CA); Faucher, Daniel, Roxboro, Quebec H8y 1M5 (CA)
(74) Representative: Hoste, Colin Francis

(57) **Abstract**

An interface for transmitting and receiving service channel frames over an Ethernet includes an Ethernet physical layer and a physical service channel. The Ethernet physical layer is configured to transmit and receive Ethernet frames over an Ethernet physical medium. The physical service channel is configured to transmit and receive service channel frames over the Ethernet physical medium. In operation, the physical service channel transmits the service channel frames within inter-frame gaps defined by the Ethernet frames so as not to interfere with the transmission or receipt of the Ethernet frames.

## Description

### FIELD

The technology described in this patent application relates generally to the field of Ethernet systems. More particularly, the application describes a system and method for providing a service channel over the Ethernet inter-frame gap.

### BACKGROUND

A standard Ethernet physical line transports Ethernet frames that are each separated by a minimum delay, referred to as the inter-frame gap. Standard Ethernet does not support an in-band or out-band service channel. By utilizing a service channel frame inserted within the inter-frame gap, however, additional services and functionality may be implemented that are typically not available at the Ethernet physical layer.

### SUMMARY

An interface for transmitting and receiving service channel frames over an Ethernet includes an Ethernet physical layer and a physical service channel. The Ethernet physical layer is configured to transmit and receive Ethernet frames over an Ethernet physical medium. The physical service channel is configured to transmit and receive service channel frames over the Ethernet physical medium. In operation, the physical service channel transmits the service channel frames within inter-frame gaps defined by the Ethernet frames so as not to interfere with the transmission or receipt of the Ethernet frames.

### BRIEF DESCRIPTION OF THE DRAWINGS

Fig. 1 is a diagram illustrating the transmission of Ethernet frames over an Ethernet physical medium;
Fig. 2 depicts a service channel frame inserted in the inter-frame gap defined by two Ethernet frames;
Fig. 3 depicts a plurality of service channel frames transmitted over an Ethernet physical medium at a pre-defined rate;
Fig. 4 shows the physical layers of a standard Ethernet stack model, as illustrated in IEEE Std 802.3 for use with a 100 Mbps baseband network;
Fig. 5 is an Ethernet stack model having a physical service channel;
Fig. 6 is a block diagram of an example Gigabit Ethernet interface having a physical service channel;
Figs. 7A-7C depict an example service channel frame protocol; and
Fig. 8 is a system diagram illustrating an example SONET/SDH transport network utilizing a service channel equipped Ethernet.

### DETAILED DESCRIPTION

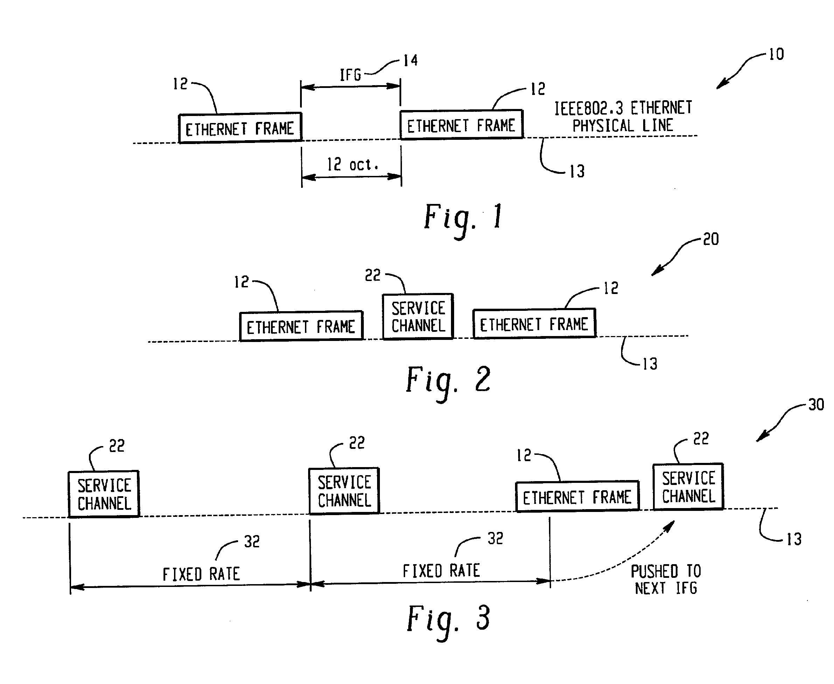

With reference now to the drawing figures, Fig. 1 is a diagram illustrating the transmission of Ethernet frames 12 over an Ethernet physical medium 13, such as a fiber optic or copper cable. In accordance with industry standards, Ethernet frames 12 transmitted over an Ethernet physical medium 13 are each separated by a minimum delay, referred to as the inter-frame gap (IFG) 14. One industry standard governing Ethernet communication is set forth in IEEE Standard 802.3, 2000 Edition (IEEE Std 802.3). In accordance with IEEE Std 802.3, the minimum inter-frame gap 14 may vary from 9.6µs for a 10 Mbps baseband network to 0.096 µs for a 1000 Mbps baseband network. In each case (e.g., 10 Mbps, 100 Mbps, 1000 Mbps Ethernet, etc.), an inter-frame gap 14 defined by two adjacent Ethernet frames 12 should be large enough to transport at least twelve (12) octets of information. That is, the standard inter-frame gap 14 provides the necessary space for transporting of up to twelve (12) octets of information, independent of the transmission speed.

Fig. 2 depicts a service channel frame 22 inserted in the inter-frame gap 14 defined by two Ethernet frames 12. The service channel frame 22 should be limited in size (12 octets for IEEE Std 802.3 Ethernet) such that the service channel frame 22 can be transmitted within the inter-frame gap 14 without interfering with Ethernet frame 12 traffic. IEEE Std. 802.3 does not support an in-band or out-band service channel. However, by utilizing a service channel frame 22, specific actions and services that are typically not available at the Ethernet physical layer can be implemented. For example, the service channel frame 22 may be utilized in a point-to-point Ethernet transmission to provide monitoring and service functions. For instance, the service channel frame 22 may be used for line quality monitoring; an Operation, Administration, Maintenance and Provisioning (OAM&P) channel; remote monitoring; measuring Service Level Agreement over an Ethernet line between two customers; providing additional Ethernet line protection against failure and Ethernet line switching; providing line monitoring for maintenance purposes; service billing; fault localization and maintenance; far-end Ethernet equipment (or customer equipment) management; and other types of monitoring and services.

It should be understood that a standard function of the inter-frame gap 14 is to enable collision detection in an Ethernet system operating in half-duplex mode. Therefore, service channel frames 22 should preferably be employed in a full-duplex mode of operation.

Fig. 3 depicts a plurality of service channel frames 22 transmitted over an Ethernet physical medium 13 at a pre-defined rate 32. If there is no Ethernet frame 12 traffic, or if there is sufficient space in the inter-frame gap 14, then a plurality of service channel frames 22 may be transmitted over the Ethernet physical line 13 at a fixed rate 32 without the occurrence of an Ethernet frame 22. If an Ethernet frame 22 is transmitted while service channel frames 22 are being transmitted at a fixed rate 32, then the corresponding service channel frame 22 is delayed until the next inter-frame gap, as illustrated, so as not to interfere with the transmission of Ethernet frame 22.

The service channel frames 22 may, for example, be transmitted at a fixed rate 32 in order to maintain an active service channel without regard to Ethernet frame 12 traffic. For example, service channel frames 22 may be transmitted at a fixed rate 32 to continuously monitor the integrity of the Ethernet physical line 13, or to perform other continuously-active service or monitoring functions.

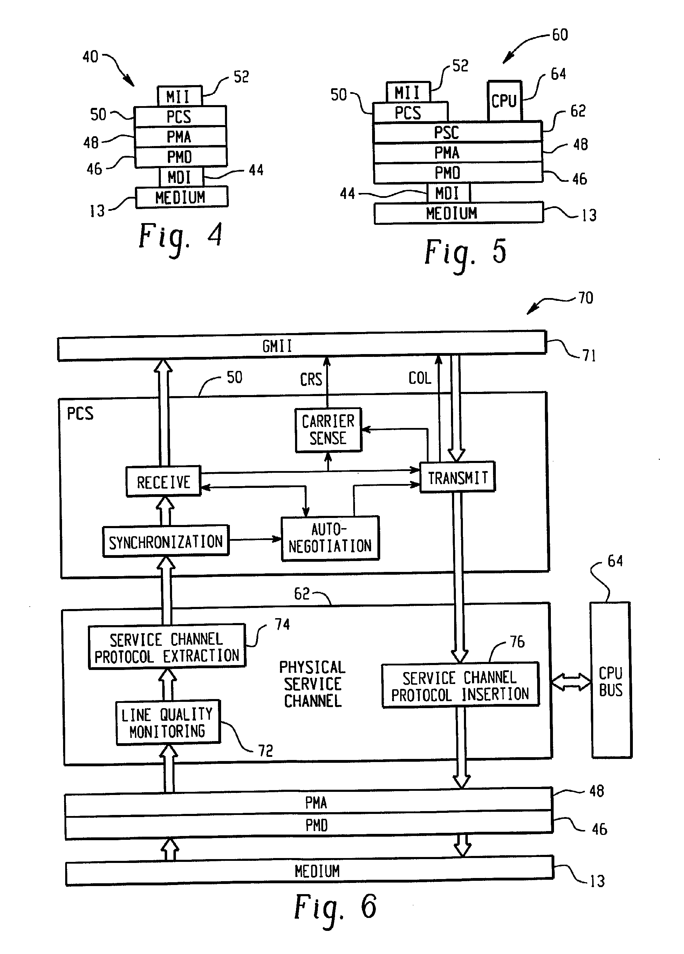

Fig. 4 shows the physical layers of a standard Ethernet stack model 40, as illustrated in IEEE Std 802.3 for use with a 100 Mbps baseband network. The standard 100 Mbps Ethernet stack 40 includes a medium dependent interface (MDI) 44, a physical medium dependent sublayer (PMD) 46, a physical medium attachment sublayer (PMA) 48, a physical coding sublayer (PCS) 50, and a media independent interface (MII) 52. The PMD 46, PMA 48 and PCS 50 are referred to collectively as the Ethernet physical layer. Also illustrated is the Ethernet physical medium 13.

The Ethernet physical layer collectively transmits, receives, and manages the encoded signals that are impressed on and recovered from the physical medium 13. The PCS 50 is typically responsible for coding and decoding data octets, generating carrier sense and collision detection indications, and managing the auto-negotiation process. The PMA 48 typically serializes and deserializes the data. The PMD 46 typically functions as an interface specific to the particular type of Ethernet physical medium 13, such as single-mode optical fiber, multi-mode optical fiber, and copper cabling. The MII 52 (or GMII in the case of Gigabit Ethernet) provides a transparent signal interface between the Ethernet physical layer and an OSI data link layer, such as a media access control (MAC) layer. The MDI 44 is a physical connector that couples the PMD 46 with the Ethernet physical medium 13. A more detailed description of the Ethernet stack model 40, along with other standard Ethernet stacks, is set forth in IEEE Std 802.3.

Fig. 5 is an Ethernet stack model 60 having a physical service channel 62. As illustrated, the physical service channel 62 may be coupled between the physical coding sublayer (PCS) 50 and the physical medium attachment (PMA) sublayer 48 in a standard Ethernet stack model 40. The physical service channel 62 is configured to transmit and receive service channel frames 22 over the Ethernet physical medium 13. Also illustrated is a central processing unit (CPU) bus for coupling the physical service channel 62 to a processing device. A more detailed description of the physical service channel 62 is provided below with reference to Fig. 6.

It should be understood that the physical service channel may be similarly incorporated in other Ethernet stack models. For example, a standard Ethernet stack model for 1000 Mbps Ethernet (i.e., a Gigabit Ethernet stack model) is similar to the Ethernet stack model 40 of Fig. 4, except that the MII 52 is replaced with a Gigabit Media Independent Interface (GMII) (see, e.g., Fig. 5).

Fig. 6 is a block diagram of an example Gigabit Ethernet interface 70 having a physical service channel 62. Similar to the 100 Mbps Ethernet stack model shown in Fig. 5, this Gigabit Ethernet stack 70 includes a PMD 46, a PMA 48, a PCS 50 and a physical service channel 62. Also illustrated are the Ethernet physical medium 13 and a Gigabit media independent interface (GMII) 71. The components of the Gigabit Ethernet stack 70 may, for example, be included on a single Ethernet card, but could also be implemented as separate components. Also, a plurality of Gigabit Ethernet stacks 70 could be included on the same Ethernet card.

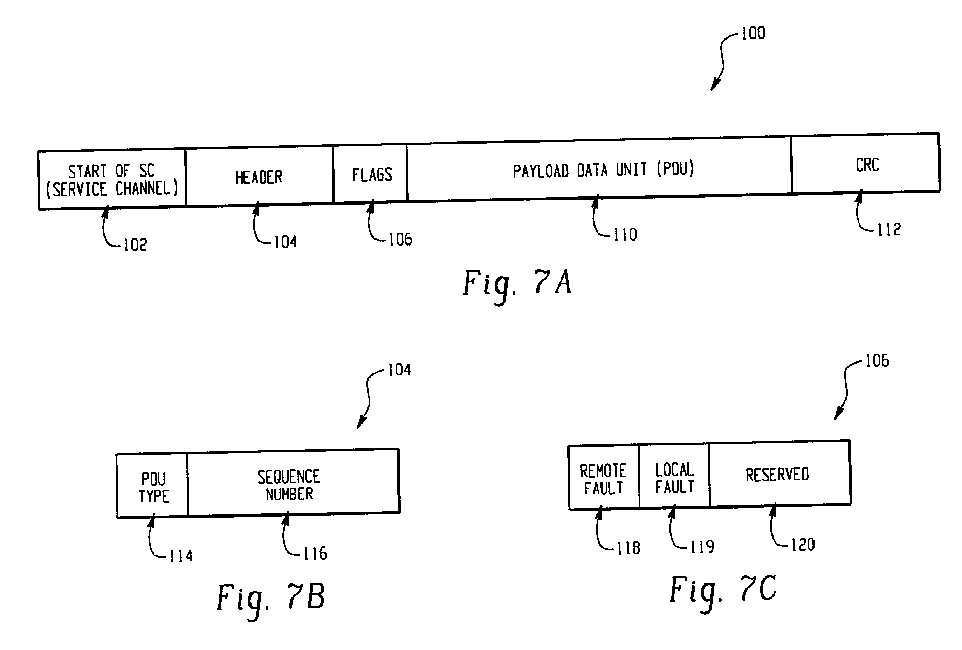

The Ethernet stack 70 is configured for a full-duplex Ethernet system, and can, therefore, both transmit and receive data from an Ethernet physical medium 13. With reference first to the receipt of information, all Ethernet data, including Ethernet frames 12 and service channel frames 22, broadcast over the physical medium 13 are received and deserialized by the PMD 46 and PMA 48, respectively. The deserialized data is transferred to the physical service channel 62, which extracts the service channel frames 22. The physical service channel 62 may, for example, include a line quality monitoring module 72 that monitors the service channel frames 22 for signal degradation, and a service channel protocol extraction module 74 that removes the service channel frames from the inter-frame gap 14. The line quality monitoring module 72 and the service channel protocol extraction module 74 may be implemented as software modules, hardware modules, or a combination of both. In one embodiment, for instance, the line quality monitoring module 72 may inspect a cyclic redundancy check byte within the service channel frame (see, e.g., Fig. 7A) to identify data transmission errors indicative of quality problems in the Ethernet physical medium 13. In addition, the extracted service channel frame 22 may be transmitted to a processing device via the CPU bus 64 to further process other embedded service or monitoring data included within the service channel frame 22. An example service channel frame protocol 100 is described in detail below with reference to Figs. 7A-7C.

As described above with reference to Fig. 3, service channel frames 22 may be broadcast over the Ethernet physical medium 13 with or without Ethernet frames 22. If received Ethernet data includes Ethernet frames 13, the service channel frames 22 are extracted, and the remaining Ethernet frames 12 are transferred from the physical service channel 62 to the PCS 50. The PCS 50 decodes the Ethernet frames 22 for use by the OSI data link layer (e.g., the MAC layer), and may also use the received Ethernet frames 22 to perform synchronization, auto-negotiation, and carrier sense functions, as described in more detail in IEEE Std. 802.3. The decoded data from the Ethernet frames 12 is then transferred via the GMII 71 (or MII 52 in the case of 100 Mbps Ethernet) to the OSI data link layer.

With reference now to data transmission, data sent from the OSI data link layer (e.g., MAC layer) via the GMII 71 (or MII 52) is encoded and encapsulated into Ethernet frames 12 by the PCS 50. The Ethernet frames 12 are then transferred to the physical service channel 62, which includes a service channel protocol insertion module 76 to insert service channel frames 22 within the inter-frame gaps 14, as described above with reference to Figs. 2 and 3. The service channel protocol insertion module 76 may be implemented as a software module, a hardware module, or a combination of both. The Ethernet transmission data, including both the Ethernet frames 12 and the service channel frames 22, is then serialized and broadcast over the Ethernet physical medium 13 by the PMA 48 and PMD 46, respectively. Also, as described above, the physical service channel 74 may broadcast service channel frames 22 via the PMA 48 and PMD 46 at a fixed rate 32 without the occurrence of an Ethernet frame 22.

Fig. 7A depicts an example service channel frame protocol 100. The service channel frame protocol 100 includes a start segment 102, a header 104, a flags segment 106, a payload data unit (PDU) 110, and a CRC byte 112. The start segment 102 may include a pre-defined series of bits that is used by an Ethernet stack 70 to identify the beginning of a service channel frame 22. An example header 104 is shown in Fig. 7B, and may include a PDU type segment 114 to identify the type of data contained in the payload data unit 110 and a sequence number 116 to distinguish the service channel frame 22 from other service channel frames broadcast from the same host. An example flags segment 106 is illustrated in Fig. 7C, and may include flags indicating the presence of a local or a remote fault. The payload data unit (PDU) 110 may, for example, include status or configuration information, one or more commands, statistical data, event data, or other monitoring or service information. The CRC 112 is a checksum that may, for example, be used to verify the integrity of the service channel data.

In one embodiment, the CRC 112 portion of the service channel protocol 100 may be used by the physical service channel 62 to monitor line quality of the Ethernet physical medium 13. For example, the physical service channel 62 in a remote host unit may continuously broadcast service channel frames 22 at a pre-determined rate 32, each including a CRC 112. The physical service channel 62 in a local host may then monitor the service channel frames 22 for errors in the CRCs 112, indicating a possible quality problem in the Ethernet physical medium 13.

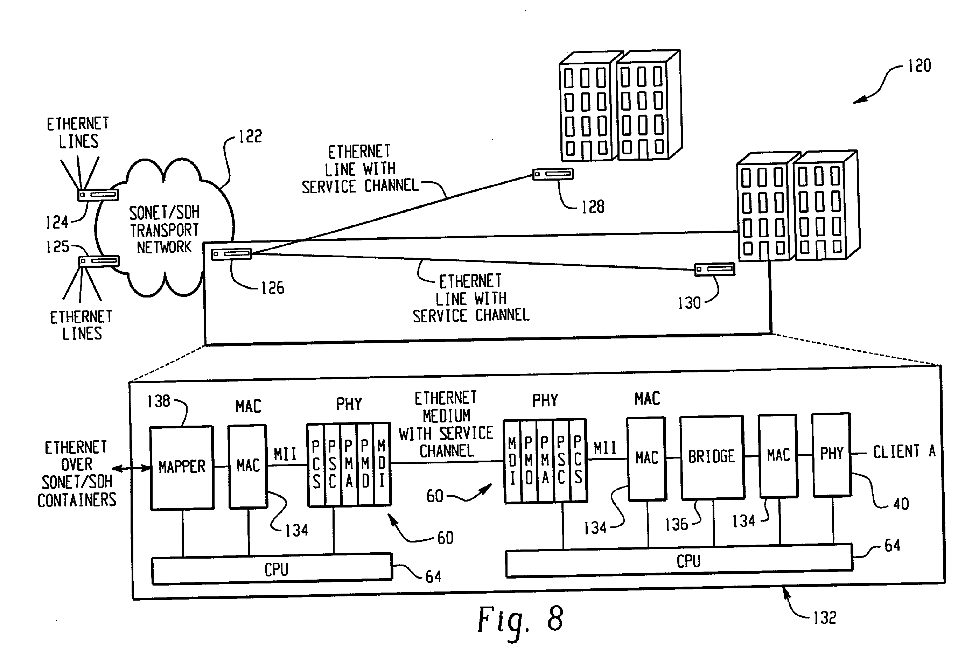

Fig. 8 is a system diagram 120 illustrating an example SONET/SDH transport network 122 utilizing a service channel equipped Ethernet. The illustrated SONET/SDH network 122 includes a plurality of nodes 124-126, each of which provides Ethernet connections to a plurality of local clients 128, 130. Example systems for transmitting Ethernet data over a SONET/SDH network 122 are described in detail in the following coowned application, which are hereby incorporated into the present application by reference: U.S. Patent Application S/N 09/378,844, entitled "System And Method For Packet Transport In A Ring Network"; U.S. Patent Application S/N 09/817,982, entitled "Virtual Ethernet Ports With Automated Router Port Extension"; U.S. Patent Application S/N 10/163,828, entitled "Ethernet Protection System" and U.S. Patent Application S/N 10/164,180, entitled "System And Method For Transporting Channelized Ethernet Over SONET/SDH." In the illustrated system 120, however, at least one of the Ethernet connections includes a service channel, as described above.

The service channel equipped Ethernet is shown between node 126 and local client 130, and is illustrated in more detail in block 132. The network architecture detailed in block 132 illustrates the service channel equipped Ethernet stacks 60 at both the SONET/SDH node 126 and the local client 130. Also illustrated in block 132 are OSI data link layer interconnection devices and sublayers, including the MAC layers 134 that are responsible for transferring data to and from the physical layers 40, 60, a bridge 136 that links the service channel equipped Ethernet 60 to a standard Ethernet 40 at the local client 130, and a mapper 138 that is responsible for transmitting and receiving data via the SONET/SDH network 122.

This written description uses examples to disclose the invention, including the best mode, and also to enable a person skilled in the art to make and use the invention. The patentable scope of the invention may include other examples that occur to those skilled in the art.

## Claims

1. An interface for transmitting and receiving service channel frames over an Ethernet, comprising:
an Ethernet physical layer configured to transmit and receive Ethernet frames over an Ethernet physical medium; and
a physical service channel configured to transmit and receive service channel frames over the Ethernet physical medium;
the physical service channel operable to transmit the service channel frames within inter-frame gaps defined by the Ethernet frames so as not to interfere with the transmission or receipt of the Ethernet frames.

2. The interface of claim 1, wherein the physical service channel is configured to transmit and receive a plurality of service channel frames within one inter-frame gap at a pre-defined rate.

3. The interface of claim 1, wherein the service channel frames include a maximum of twelve (12) octets of information.

4. The interface of claim 1, wherein the Ethernet physical layer includes a physical coding sublayer (PCS), a physical medium attachment (PMA) sublayer and a physical medium dependent (PMD) sublayer.

5. The interface of claim 4, wherein the physical service channel is coupled between the physical coding sublayer and the physical medium attachment sublayer of the Ethernet physical layer.

6. The interface of claim 1, further comprising a central processing unit (CPU) bus coupled to the physical service channel for coupling the physical service channel to a processing device.

7. The interface of claim 1, wherein the Ethernet physical layer and physical service channel are included on a single Ethernet card.

8. The interface of claim 7, wherein the single Ethernet card includes more than one interface.

9. The interface of claim 1, wherein the Ethernet physical layer complies with IEEE Std 802.3.

10. The interface of claim 1, wherein the interface is configured for a 100 Mbps baseband network.

11. The interface of claim 1, wherein the interface is configured for a 1000 Mbps baseband network.

12. The interface of claim 1, wherein the physical service channel comprises:
a service channel protocol extraction module that extracts received service channel frames from the inter-frame gaps; and
a service channel protocol insertion module that inserts service channel frames into the inter-frame gaps to transmit the service channel frames over the Ethernet physical medium.

13. The interface of claim 12, wherein the physical service channel further comprises:
a line quality monitoring module that monitors service channel frames received from the Ethernet physical medium to detect signal degradation in the received service channel frames.

14. The interface of claim 13, wherein the line quality monitoring module analyzes a cyclic redundancy check portion of the received service channel frames in order to detect data transmission errors in the received service channel frames.

15. The interface of claim 1, wherein the physical service channel provides an Operation, Administration, Maintenance and Provisioning (OAM&P) channel for the Ethernet.

16. The interface of claim 1, wherein the physical service channel is used to monitor the amount of Ethernet traffic between the interface and another interface.

17. The interface of claim 2, wherein the physical service channel is used to monitor the integrity of the Ethernet physical medium.

18. The interface of claim 1, wherein the service channel frames include a header portion and a payload data unit (PDU).

19. The interface of claim 18, wherein the header portion indicates the type of information included in the PDU.

20. The interface of claim 18, wherein the service channel frames further include a start segment indicating the beginning of the service channel frame.

21. The interface of claim 18, wherein the service channel frames further include a flags segment.

22. The interface of claim 21, wherein the flags segment is configured to indicate the presence of a local or remote fault.

23. The interface of claim 18, wherein the service channel frames further include a cyclic redundancy check portion.

24. The interface of claim 1, wherein the interface is configured as an Ethernet interface in a synchronous optical network (SONET).

25. The interface of claim 1, wherein the interface is configured as an Ethernet interface in a synchronous digital hierarchy (SDH) network.

26. A method of providing a service channel in an Ethernet, comprising the steps of:
encapsulating service channel data in a service channel frame;
identifying an inter-frame gap defined by two Ethernet frames broadcast on an Ethernet physical medium;
inserting the service channel frame into the inter-frame gap without interfering with the transmission of the Ethernet frames; and
broadcasting the service channel frame within the inter-frame gap over the Ethernet physical medium to a remote Ethernet client.

27. The method of claim 26, comprising the further steps of:
broadcasting additional service channel frames at a pre-defined rate within the inter-frame gap.

28. An interface for transmitting and receiving service channel frames over an Ethernet, comprising:
an Ethernet physical layer configured to transmit and receive Ethernet frames over an Ethernet physical medium;
means for identifying inter-frame gaps defined by the Ethernet frames;
means for encapsulating service channel information into a service channel frame; and
means for inserting the service channel frame into one of the inter-frame gaps and transmitting the service channel frame over the Ethernet physical medium without interfering with the transmission of the Ethernet frames.
